# FASCICULE DE BREVET EUROPEEN

(11) **EP 1 855 050 B1**
(45) Date de publication et mention de la délivrance du brevet: **08.04.2009**
(21) Numéro de dépôt: 07290500.3
(22) Date de dépôt: 23.04.2007
(51) Int. Cl.: F21S 8/10, F21V 17/00

(54) **Projecteur pour véhicule automobile comportant un système de formation de faisceau du type à projection de conception simplifiée**
Scheinwerfer für Kraftfahrzeug, der ein System zur Erzeugung von Strahlenbündeln vom Projektionstyp mit vereinfachter Gestaltung umfasst
Automobile headlight comprising a projection-type beam formation system with simplified design

(30) Priorité: 12.05.2006 FR 0604385
(43) Date de publication de la demande: 14.11.2007
(73) Titulaire: VALEO VISION, 93012 Bobigny Cedex (FR)
(72) Inventeur: Le Balpe, Christian, 49130 Saint Gemmes sur Loire (FR)

(56) Documents cités:
- US-A- 4 839 785
- US-A- 4 895 693
- US-A- 5 209 558

## Description

La présente invention concerne les projecteurs destinés aux véhicules automobiles, du type de ceux qui comportent au moins un module elliptique.

L'invention concerne en général les ensembles projecteurs pour véhicules automobiles, et plus particulièrement les projecteurs de type à double faisceau possédant dans un boîtier unique à la fois une unité de projection de faisceau de route et une unité de projection de faisceau de croisement.

Conventionnellement, les projecteurs pour véhicules automobiles utilisés de nos jours sont de type à double faisceau, produisant de manière sélective des faisceaux de croisement et des faisceaux de route. Le faisceau de route est le faisceau de lumière destiné à un éclairage vers l'avant qui est particulièrement utilisé lorsque le véhicule ne rencontre pas ni ne suit d'autres véhicules, alors que le faisceau de croisement est le faisceau de lumière destiné à un éclairage de proximité vers l'avant, particulièrement utilisé lorsque le véhicule rencontre ou suit d'autres véhicules.

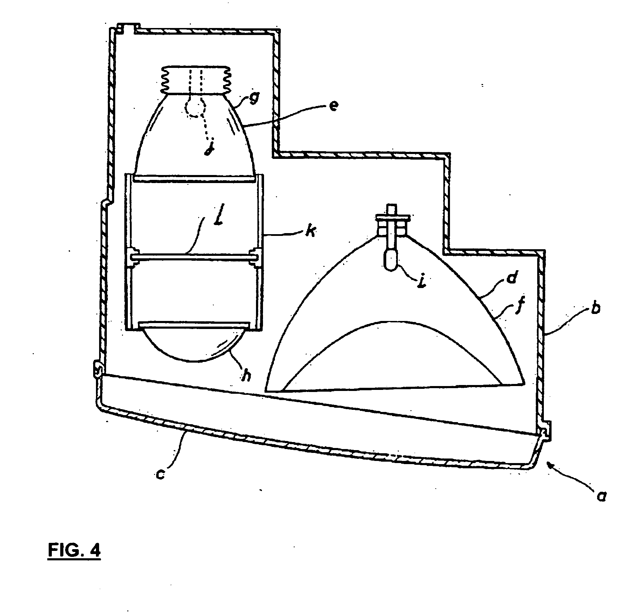

Un projecteur conventionnel de type à double faisceau est schématiquement illustré à la Figure 4 des dessins ci-joints, et est désigné dans son ensemble par la référence "a". Le projecteur "a" comprend un boîtier "b" muni d'une ouverture vers l'avant, une glace "c" couvrant cette ouverture tout en laissant passer les rayons lumineux émis par les dispositifs situés à l'intérieur de ce boîtier.

Un dispositif d'émission de faisceau de route "d" et un dispositif d'émission de faisceau de croisement "e" sont installés séparément à l'intérieur du boîtier "b". Le dispositif d'émission de faisceau de route "d" est du type à réflexion, et comprend une source de lumière "i" et un réflecteur du genre parabolique "f", la source de lumière "i" étant installée au foyer du réflecteur parabolique "f".

Un dispositif d'émission de faisceau de croisement "e" est du type à projection, et comprend une source de lumière "j" située au premier foyer d'un réflecteur du genre elliptique "g", une lentille convergente "h" étant disposée à l'avant du réflecteur "g". La lentille "h" est maintenue en position par rapport au réflecteur "g" au moyen d'une pièce intermédiaire "k" fixée sur le réflecteur "g".

Un cache de lumière "l" est disposé entre le réflecteur "g" et la lentille "h", de manière à ce que son bord supérieur soit placé au voisinage immédiat du deuxième foyer du réflecteur "g", confondu avec le foyer de la lentille "h", pour former, de façon connue, la coupure ou limite clair-obscur du faisceau de croisement émis.

Ainsi qu'on le comprend bien sur le dessin, le projecteur de ce type conventionnel peut produire les faisceaux de route et de croisement souhaités en activant de manière sélective les sources lumineuses "i" et "j" des dispositifs de projection de faisceau "d" et "e".

Toutefois, la conception de ce type de projecteur présente différents inconvénients.

En premier lieu, la conception radicalement différente des dispositifs "d" et "e" résulte dans le fait qu'il existe entre ces deux dispositifs un espace vide, destiné à permettre leurs réglages aussi bien en site qu'en azimut. Bien que des masques ou enjoliveurs puissent être prévus à cet effet, ils ne parviennent qu'imparfaitement à cacher cet espace.

En second lieu, étant donné que les dispositifs de projection de faisceau de route et de croisement "d" et "e" sont assemblés indépendamment dans le boîtier "b", le feu avant nécessite un grand nombre de parties pour sa production et nécessite de ce fait un grand nombre de phases d'assemblage. Ceci est la cause d'une augmentation du coût de production du feu avant.

Le document US 4 839 785 A montre un projecteur dont le réflecteur de type elliptique et la lentille sont fixés sur le réflecteur de type parabolique.

La présente invention se place dans ce contexte et a pour but de créer un projecteur pour véhicule automobile qui soit exempt des inconvénients mentionnés ci-dessus.

Selon la présente invention, on réalise un projecteur dont les caractéristiques sont la facilité de construction, la simplicité du réglage et le faible coût.

La présente invention propose donc un projecteur pour véhicule automobile du type à système optique multiple, comprenant dans un boîtier
- au moins un système de formation de faisceau du type à réflexion, comportant un réflecteur du type parabolique au foyer duquel est disposée une première source lumineuse, et
- au moins un système de formation de faisceau du type à projection, comportant un réflecteur de type elliptique, au premier foyer duquel est disposée une deuxième source lumineuse, une lentille convergente dont un foyer objet coïncide avec le deuxième foyer du réflecteur elliptique.

Selon l'invention, le réflecteur de type elliptique et la lentille sont fixés sur le réflecteur de type parabolique, et le projecteur comporte en outre un cache disposé de manière à ce que son bord supérieur passe par le foyer objet de la lentille, le cache étant fixé sur des colonnettes présentant vers l'arrière des faces terminales sur lesquelles est fixé le réflecteur de type elliptique.

Selon d'autres caractéristiques,
- le réflecteur de type elliptique et la lentille sont fixés sur une extension du réflecteur de type parabolique ;
- les faces terminales des colonnettes sont coplanaires.
- l'extension comporte un siège annulaire sur lequel vient en appui une partie périphérique de la lentille ;
- la lentille vient en appui sur le siège vers l'arrière en direction de la deuxième source lumineuse ;
- la lentille vient en appui sur le siège vers l'avant en direction de l'émission du faisceau lumineux ;
- le cache est fixé sur les faces terminales des colonnettes.

D'autres objets et avantages de la présente invention apparaîtront à la lumière de la description suivante, en liaison avec les dessins ci-joints, dans lesquels:
- la Figure 1 représente une vue en coupe horizontale d'un projecteur réalisé selon la présente invention;
- les Figures 2 et 3 représentent des vues en perspective du projecteur de la Figure 1, et
- la Figure 4, déjà commentée, représente une vue en coupe horizontale d'un projecteur réalisé selon la technologie connue.

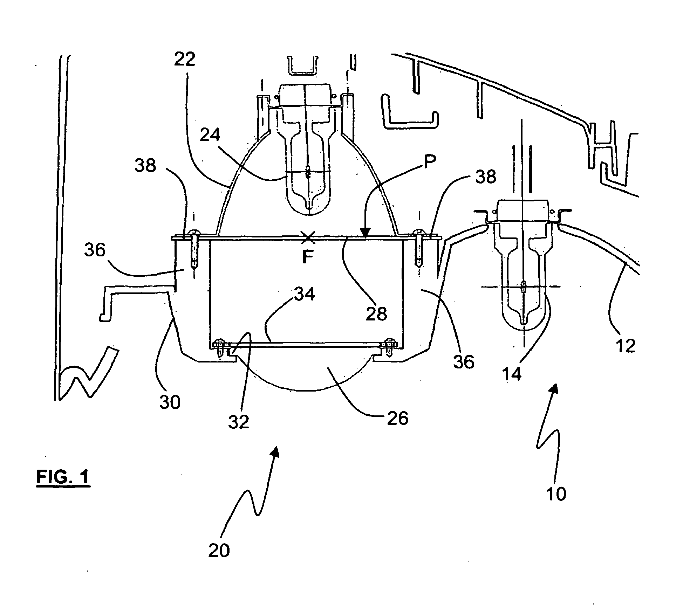

Dans la présente description, l'avant est dirigé dans le sens d'émission de la lumière pour former les faisceaux d'éclairage, et correspond au sens de déplacement normal du véhicule. Sur la Figure 1, l'avant est ainsi tourné vers le bas de la Figure.

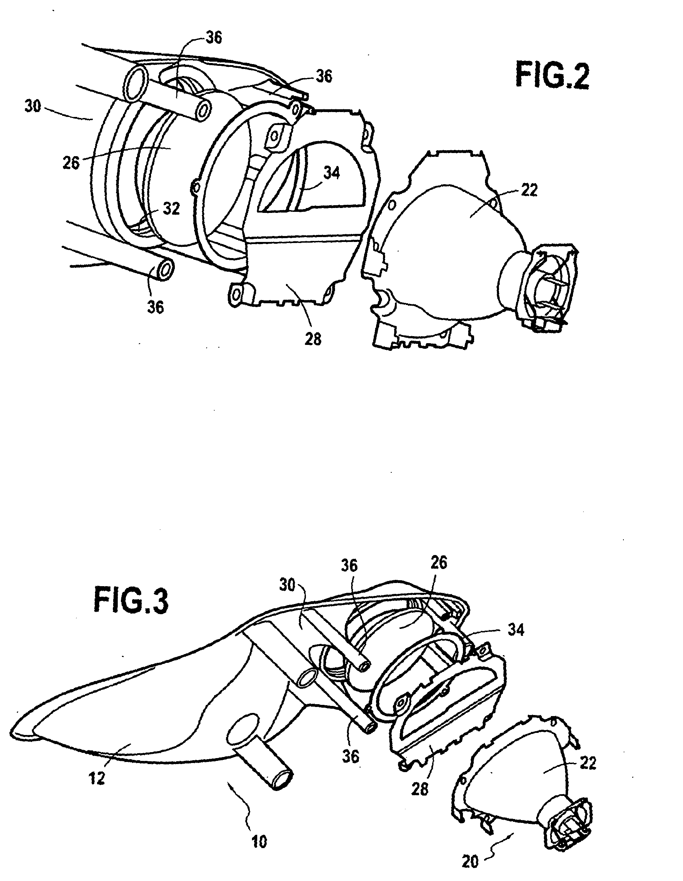

En référence aux Figures 1 à 3, on a représenté schématiquement en coupe sur la Figure 1 et en perspective isométrique sur les Figures 2 et 3 les composants principaux d'un projecteur de véhicule automobile selon la présente invention, à savoir :
- un système de formation de faisceau du type à réflexion, désigné dans son ensemble par la référence 10, et comportant un réflecteur 12 du type parabolique au foyer duquel est disposée une première source lumineuse 14, et
- un système de formation de faisceau du type à projection, désigné dans son ensemble par la référence 20, et comportant un réflecteur de type elliptique 22, au premier foyer duquel est disposée une deuxième source lumineuse 24, une lentille convergente 26 dont un foyer objet coïncide avec le deuxième foyer du réflecteur elliptique.

Le système de formation de faisceau 10 est par exemple dédié à la formation d'un faisceau réglementaire, et le système de formation de faisceau 20 est par exemple dédié à la formation d'un autre faisceau réglementaire. L'un de ces faisceaux sera avantageusement un faisceau de croisement, et l'autre faisceau un faisceau de route.

Conformément à la présente invention, le réflecteur de type parabolique 12 s'étend au delà de la partie formant réflecteur proprement dite, et comporte ainsi une extension 30, d'une seule pièce avec le réflecteur 12.

Le réflecteur de type elliptique 22 et la lentille 26 sont fixés sur le réflecteur de type parabolique 12, ou plus exactement sur l'extension 30 de celui-ci, comme on va maintenant le décrire.

L'extension 30 comporte un siège annulaire 32, destiné à recevoir la lentille 26 par l'intermédiaire d'une partie périphérique de celle-ci. La lentille 26 peut être montée sur l'extension 30 par l'avant, c'est à dire en venant reposer sur le siège 32 en direction de la lampe 24, ou, comme on l'a représenté sur la Figure 1, par l'arrière, le siège 32 étant orienté vers la lampe 24, la lentille 26 reposant sur celui-ci en direction de la sortie du faisceau lumineux.

La fixation de la lentille 26 sur son siège 32 pourra par exemple être assurée par un jonc 34, venant en appui sur la partie périphérique de la lentille 26, et comportant des ouvertures pour le passage de vis de fixation dans l'extension 30.

L'extension 30 comporte également des colonnettes 36, dirigées vers l'arrière, au nombre de trois par exemple. Elles sont venues de matière par moulage avec le réflecteur de type parabolique 12 et son extension 30. Ces colonnettes 36 présentent vers l'arrière des faces terminales 38 coplanaires, définissant ensemble un plan de référence P pour le projecteur de type elliptique.

Par conception, ce plan P est à une distance parfaitement définie par rapport au siège 32 de la lentille 26, puisque ces deux éléments font partie de la même pièce. Il peut donc avantageusement être disposé à une distance prédéterminée du siège 32 pour que le foyer objet F de la lentille 26 soit situé dans ce plan P.

On peut alors fixer sur les colonnettes 36 le réflecteur elliptique 22, choisi pour que le deuxième foyer de ce réflecteur 22 coïncide avec le foyer F de la lentille.

On a ainsi réalisé un projecteur à double faisceau pour véhicule automobile, comportant un système de formation de faisceau du type à projection 20, solidaire d'un système de formation de faisceau du type à réflexion 10, qui est exempt des inconvénients des projecteurs connus. En effet, étant solidaires l'un de l'autre, il n'existe pas d'espace vide entre les deux systèmes de formation de faisceaux. Il n'est donc pas nécessaire de disposer de masque ou d'enjoliveur supplémentaire pour parfaire l'esthétique de ce projecteur.

D'autre part, étant solidaires l'un de l'autre, ces deux systèmes de formation de faisceaux peuvent être facilement conçus pour que leurs axes optiques, c'est à dire les axes selon lesquels ils émettent des faisceaux lumineux, soient parallèles. Il en résulte alors qu'il suffira de régler l'un de ces systèmes de formation de faisceaux, en site et/ou en azimut, pour que l'autre système de formation de faisceau soit réglé lui aussi en site et/ou en azimut. On pourra par exemple avantageusement prévoir que ces deux systèmes de formation de faisceaux soient montés dans un boîtier sur une même platine, qui sera pourvue de moyens de réglage par rapport au boîtier.

De plus, la lentille 26 et le réflecteur 22 sont tous deux fixés sur une même pièce, à savoir l'extension 30. Il est donc possible de leur donner des positions relatives parfaitement déterminées, sans utiliser de pièces intermédiaires supplémentaires, qui sont sources de tolérances accrues.

Dans le mode de réalisation qui vient d'être décrit, le système de formation de faisceau du type à projection 20 pourra par exemple émettre un faisceau de route, et le système de formation de faisceau du type à réflexion 10 pourra alors émettre un faisceau de croisement. On sait en effet, par les enseignements des documents (brevets VLS de surfaces complexes) réaliser des réflecteurs capables de former par eux-mêmes des faisceaux à coupure, sans qu'il soit besoin de disposer devant le réflecteur une glace striée réalisant la coupure du faisceau de croisement.

On peut également prévoir, comme on l'a représenté sur les Figures, que le système de formation de faisceau du type à projection 20 soit dédié à la formation d'un faisceau de croisement, et que le système de formation de faisceau du type à réflexion 10 soit dédié à la formation d'un faisceau de route. La présente invention permet facilement une telle réalisation.

On a vu plus haut que les faces terminales 38 des colonnettes 36 définissent par construction un plan P qui contient à la fois le deuxième foyer du réflecteur elliptique 22 et le foyer objet de la lentille 26, ce plan P ayant une position parfaitement définie par rapport à la fois à la lentille 26 et au réflecteur 22. Il suffit alors de disposer dans ce plan P un cache de coupure 28 de manière telle que son bord supérieur passe par les foyers F confondus du réflecteur et de la lentille.

On pourra par exemple fixer ce cache sur les extrémités 38 des colonnettes 36, pour qu'il ait lui aussi une position parfaitement déterminée par rapport simultanément à la lentille 26 et au réflecteur 22. En variante, ou pourra prévoir, dans une première étape, de solidariser le réflecteur 22 et le cache 28, par exemple par sertissage du réflecteur sur le cache, puis de fixer cet ensemble sur les colonnettes 36.

On a ainsi réalisé un autre projecteur à double faisceau pour véhicule automobile, comportant un système de formation de faisceau du type à projection 20 pour l'émission d'un faisceau de croisement, solidaire d'un système de formation de faisceau du type à réflexion 10 pour l'émission d'un faisceau de route, qui présente les mêmes avantages que dans le mode de réalisation précédent.

La conception selon la présente invention, selon laquelle les trois composants principaux d'un système de formation de faisceau du type à projection, le réflecteur 22, le cache 28 et la lentille 26, sont fixés sur une pièce commune, à savoir l'extension 30, présente de nombreux avantages.

La réalisation d'un système de formation de faisceau du type à projection selon l'invention nécessite moins de composants, puisqu'il n'est plus nécessaire de réaliser un module elliptique indépendant, avec une pièce intermédiaire entre le réflecteur et la lentille, puis de le faire coopérer avec un système de formation de faisceau du type à réflexion dans le même boîtier, en utilisant différentes pièces de liaison. Il en résulte un projecteur de poids moindre, nécessitant moins de composants, et donc de fabrication plus aisée et moins coûteuse.

Le positionnement relatif de ces trois composants, fixés sur un même élément, peut être assuré avec des tolérances minimales, voire nulles, la chaîne de côtes étant réduite à sa plus simple expression. Il n'est ainsi plus nécessaire d'effectuer des réglages des composants les uns par rapport aux autres, la fabrication étant là encore simplifiée.

Bien entendu, la présente invention n'est pas limitée aux modes de réalisation qui ont été décrits, mais l'homme du métier pourra au contraire lui apporter de nombreuses modifications qui rentrent dans son cadre.

C'est ainsi par exemple qu'un même projecteur pourra comporter plusieurs ensembles tels qu'ils viennent d'être décrits, c'est à dire comportant plusieurs systèmes de formation de faisceaux du type à projection, les composants principaux de chaque système, à savoir le réflecteur et la lentille, et éventuellement le cache, étant fixés sur un même composant faisant partie d'un autre système de formation de faisceau du type à projection.

## Revendications

1. Projecteur pour véhicule automobile du type à système optique multiple, comprenant dans un boîtier
- au moins un système (10) de formation de faisceau du type à réflexion, comportant un réflecteur (12) du type parabolique au foyer duquel est disposée une première source lumineuse (14), et
- au moins un système (20) de formation de faisceau du type à projection, comportant un réflecteur de type elliptique (22), au premier foyer duquel est disposée une deuxième source lumineuse (24), une lentille convergente (26) dont un foyer objet coïncide avec le deuxième foyer du réflecteur elliptique (22),
le réflecteur de type elliptique (22) et la lentille (26) étant fixés sur le réflecteur de type parabolique (12, 30), **caractérisé en ce que** le projecteur comporte en outre un cache (28) disposé de manière à ce que son bord supérieur passe par le foyer objet de la lentille (26), le cache (28) étant fixé sur des colonnettes (36) présentant vers l'arrière des faces terminales (38) sur lesquelles est fixé le réflecteur de type elliptique (22).

2. Projecteur selon la revendication 1, **caractérisé en ce** le réflecteur de type elliptique (22) et la lentille (26) sont fixés sur une extension (30) du réflecteur de type parabolique (12).

3. Projecteur selon la revendication 1, **caractérisé en ce que** les faces terminales (38) des colonnettes (36) sont coplanaires.

4. Projecteur selon la revendication 2, **caractérisé en ce que** l'extension (30) comporte un siège annulaire (32) sur lequel vient en appui une partie périphérique de la lentille (26).

5. Projecteur selon la revendications précédente, **caractérisé en ce que** la lentille (26) vient en appui sur le siège (32) vers l'arrière en direction de la deuxième source lumineuse (24).

6. Projecteur selon la revendication 4, **caractérisé en ce que** la lentille (26) vient en appui sur le siège (32) vers l'avant en direction de l'émission du faisceau lumineux.

7. Projecteur selon la revendication précédente, **caractérisé en ce que** le cache (28) est fixé sur les faces terminales (38) des colonnettes (36)

## Claims

1. Headlight for a motor vehicle, of the multiple optical system type, comprising in a case:
- a least one system (10) for formation of a beam of the reflection type, comprising a reflector (12) of the parabolic type, at the focal point of which a first source of light (14) is provided; and
- a least one system (20) for formation of a beam of the projection type, comprising a reflector (22) of the elliptical type, at the focal point of which there is provided a second source of light (24), and a converging lens (26), an object focal point of which coincides with the second focal point of the elliptical reflector (22), the reflector of the elliptical type (22) and the lens (26) being secured to the reflector of the parabolic type (12, 30),
**characterised in that** the headlight additionally comprises a mask (28) which is arranged such that its upper edge passes via the object focal point of the lens (26), the mask (28) being secured to small columns (36) which have, towards the rear, end surfaces (38) onto which the reflector of the elliptical type (22) is secured.

2. Headlight according to claim 1, **characterised in that** the reflector of the elliptical type (22) and the lens (26) are secured to an extension (30) of the reflector of the parabolic type (12).

3. Headlight according to claim 1, **characterised in that** the end surfaces (38) of the small columns (36) are co-planar.

4. Headlight according to claim 2, **characterised in that** the extension (30) comprises an annular seat (32) on which a peripheral part of the lens (26) is supported.

5. Headlight according to the preceding claim, **characterised in that** the lens (26) is supported on the seat (32) towards the rear in the direction of the second source of light (24).

6. Headlight according to claim 4, **characterised in that** the lens (26) is supported on the seat (32) towards the front in the direction of emission of the beam of light.

7. Headlight according to the preceding claim, **characterised in that** the mask (28) is secured to the end surfaces (38) of the small columns (36).

## Patentansprüche

1. Kraftfahrzeugscheinwerfer des Typs mit Mehrfachoptiksystem, der in einem Gehäuse umfasst:
- wenigstens ein Lichtbündelbildungssystem (10) vom Reflexionstyp mit einem Reflektor (12) vom parabolischen Typ, in dessen Brennpunkt eine erste Lichtquelle (14) angeordnet ist, und
- wenigstens ein Lichtbündelbildungssystem (20) vom Projektionstyp mit einem Reflektor (22) vom elliptischen Typ, in dessen erstem Brennpunkt eine zweite Lichtquelle (24) angeordnet ist, und einer Sammellinse (26), deren einer objektseitiger Brennpunkt mit dem zweiten Brennpunkt des elliptischen Reflektors (22) zusammenfällt,
wobei der elliptische Reflektor (22) und die Linse (26) an dem parabolischen Reflektor (12, 30) befestigt sind,
**dadurch gekennzeichnet, dass** der Scheinwerfer ferner eine Blende (28) umfasst, die solchermaßen angeordnet ist, dass ihr oberer Rand durch den objektseitigen Brennpunkt der Linse (26) verläuft, wobei die Blende (28) auf Bolzen (36) befestigt ist, die an der Rückseite Endflächen (38) aufweisen, an denen der elliptische Reflektor (22) befestigt ist.

2. Scheinwerfer nach Anspruch 1,
**dadurch gekennzeichnet, dass** der elliptische Reflektor (22) und die Linse (26) auf einer Verlängerung (30) des parabolischen Reflektors (12) befestigt sind.

3. Scheinwerfer nach Anspruch 1,
**dadurch gekennzeichnet, dass** die Endflächen (38) der Bolzen (36) koplanar sind.

4. Scheinwerfer nach Anspruch 2,
**dadurch gekennzeichnet, dass** die Verlängerung (30) einen ringförmigen Sitz (32) aufweist, an dem ein Randstück der Linse (26) in Anlage gelangt.

5. Scheinwerfer nach dem vorhergehenden Anspruch,
**dadurch gekennzeichnet, dass** die Linse (26) an dem Sitz (32) an der Rückseite in Richtung der zweiten Lichtquelle (24) in Anlage gelangt.

6. Scheinwerfer nach Anspruch 4,
**dadurch gekennzeichnet, dass** die Linse (26) an dem Sitz (32) an der Vorderseite in Emissionsrichtung des Lichtbündels in Anlage gelangt.

7. Scheinwerfer nach dem vorhergehenden Anspruch,
**dadurch gekennzeichnet, dass** die Blende (28) an den Endflächen (38) der Bolzen (36) befestigt ist.
